# EUROPÄISCHE PATENTSCHRIFT

(11) **EP 1 449 356 B1**
(45) Veröffentlichungstag und Bekanntmachung des Hinweises auf die Patenterteilung: **21.12.2005**
(21) Anmeldenummer: 02779205.0
(22) Anmeldetag: 04.11.2002
(51) Int. Cl.: H04N 5/222, F16M 11/20

(54) **KAMERASTATIV FÜR EINE FERNSEHKAMERA**
CAMERA STAND FOR A TELEVISION CAMERA
STATIF POUR CAMERA DE TELEVISION

(30) Priorität: 06.11.2001 DE 10155005
(43) Veröffentlichungstag der Anmeldung: 25.08.2004
(73) Patentinhaber: Pintore, Robert, 10407 Berlin (DE)
(72) Erfinder: Pintore, Robert, 10407 Berlin (DE)
(74) Vertreter: Specht, Volker
(86) Internationale Anmeldenummer: PCT/DE2002/004136
(87) Internationale Veröffentlichungsnummer: WO 2003/041400

(56) Entgegenhaltungen:
- WO-A-00/79178
- DE-A- 3 815 852
- US-A- 3 143 326
- US-A- 5 833 308

## Beschreibung

Die Erfindung betrifft ein niedrig bauendes Kamerastativ für eine Fernsehkamera mit einem auf einer Tragsäule angebrachten Schwenk-Neige-Kopf für die Kamera und einem unabhängig von dieser um die Tragsäule verschwenkbaren Sitz.

Bei Fernsehübertragungen, insbesondere im Bereich des Sports, wie beispielsweise Tennis, Fußball oder Leichtathletik, ist es zur Wiedergabe der tatsächlichen Atmosphäre im Stadion bzw. auf dem Tennisplatz und zur Erzeugung guter Fernsehbilder für den Zuschauer zu Hause sowie zur Vermeidung einer Sichtbehinderung für die Zuschauer im Stadion erforderlich, die Fernsehkamera auf einem möglichst niedrigen Niveau anzuordnen. Da die Kamera in diesem Fall nur in einer sitzenden Position des Kameramanns bedient werden kann, ist dem Kamerastativ ein um dieses schwenkbarer Sitz zugeordnet.

Bei einer bekannten Vorrichtung dieser Art ist die Kamera mit ihrem Schwenk-Neige-Kopf auf einem auf Rollen verfahrbaren, arretierbaren Stativ angebracht. Um das Kamerastativ ist in einem Halbkreis ein separates zweispuriges Schienengestell angeordnet, auf dem ein mit Rollen verfahrbarer Sitz angeordnet ist. Die Bewegung des Sitzes erfolgt in diesem Fall unabhängig von der Schwenkbewegung der Kamera. Diese Vorrichtung ist insofern nachteilig, als das Verstellen des Sitzes auf den Schienen für den Kameramann beschwerlich ist und zudem schwergängig, unzuverlässig und ungleichmäßig ist. Der Bewegungsbereich des Sitzes ist auf 180° beschränkt, das heißt, ein Verschwenken der Kamera und/oder des Sitzes um 360° ist nicht möglich. Ein weiterer Nachteil besteht schließlich darin, dass das sperrig ausgebildete Schienengestell schwer zu handhaben ist und gerade bei dem in einem Übertragungswagen nur begrenzt zur Verfügung stehenden Raum einen unvertretbar hohen Platzbedarf hat.

Es sind des weiteren niedrig bauende, mit einem schwenkbaren Sitz kombinierte Kamerastative für Fernsehkameras bekannt, bei denen auf einer halbkreisförmigen, gegebenenfalls durch zusätzliche Stützfüße gehaltenen Bodenplatte eine Tragsäule befestigt ist, an der ein von dieser unabhängig verschwenkbarer Sitz mit seitlich verstellbarer Sitzposition gelagert ist und mit dessen an der freien Stirnseite angebrachter Montageplatte der Schwenk-Neige-Kopf einer Fernsehkamera verbunden wird. Obgleich auch bei diesem nur für eine 180°-Schwenkbewegung ausgelegten Kamerastativ das Verschwenken der Kamera und des Sitzes unabhängig voneinander erfolgen kann, das heißt, die Drehbewegung des Sitzes die Kamera nicht beeinflusst, werden dennoch die auf den Sitz wirkenden senkrechten Kräfte auf die Tragsäule übertragen, so dass das von der Kamera erzeugte Bild beeinträchtigt wird. US-A-3 143 326 offenbart ein Kamerastativ mit einem aus mehreren Pfosten bestehenden Traggerüst. Auf einer Basisplatte befindet sich ein Axiallager, auf dem ein Sitz für einen Kameramann angebracht ist. Der Sitz kann dadurch um das Traggerüst geschwenkt werden.

Der Erfindung liegt die Aufgabe zugrunde, ein Kamerastativ mit einem uneingeschränkten Schwenkbereich anzugeben, platzsparend ausgebildet ist und die auf den Sitz wirkenden vertikalen Kräfte nicht auf die Kamera überträgt und das eine entspannte Sitzposition des Kameramannes gewährleistet.

Erfindungsgemäß wird die Aufgabe mit einem Kamerastativ gemäß den Merkmalen des Patentanspruchs 1 gelöst. Weitere Merkmale und vorteilhafte Ausgestaltungen der Erfindung ergeben sich aus den Unteransprüchen.

Der Grundgedanke der Erfindung besteht mit anderen Worten darin, dass die Tragsäule für die Kamera mit der Basisplatte und mit an deren Unterseite angebrachten Traghülsen, die zur beweglichen Aufnahme der Stützschienen vorgesehen sind, starr befestigt ist, während die Oberseite der Basisplatte mit einem axiale Kräfte aufnehmenden, von der Tragsäule getrennten Drucklager mit großem Durchmesser verbunden ist, an dem getrennt von der Tragsäule eine das Drucklager gleichmäßig belastende Traghülse für eine Sitzbefestigungsschiene starr befestigt ist.

Zur gleichmäßigen Kraftübertragung zwischen der Traghülse und dem Drucklager ist auf diesem ein Drehrohrträger, das heißt, ein sich mit dem drehbaren Lagerring des Drucklagers drehender Rohrabschnitt mit ebenfalls großem Durchmesser, befestigt. Vorzugsweise ist die Traghülse für die Sitzbefestigungsschiene in einer Ausnehmung der Wandung des Drehrohrträgers und an einem Bodenflansch, der jedoch nicht mit der Tragsäule verbunden ist, verschweißt.

Das Drucklager und der Drehrohrträger sind in allen Stellungen des Sitzes zwischen 0° und 360°in der Lage, die über die Sitzbefestigungsschiene auf die Traghülse ausgeübten großen vertikalen Kräfte elastisch aufzunehmen bzw. in das Drucklager einzuleiten, ohne auf die zwischen den Stirnseiten der unterhalb der Basisplatte angebrachten Traghülsen für die Stützschienen stabil befestigte Tragsäule zu wirken. Abgesehen von einer vorteilhaften leichten Drehbeweglichkeit des Sitzes im Bereich von 0 bis 360° um die Tragsäule herum, bleibt diese auch von dem Sitz ausgehenden Kräften unbeeinflusst, so dass eine einwandfreie Bildqualität bereitgestellt werden kann.

Gemäß einem weiteren wichtigen Erfindungsmerkmal wird das Anschlusskabel für die Fernsehkamera zentral von unten über die Tragsäule zugeführt und über eine Öffnung in deren Seitenwand wieder herausgeführt, so dass die Schwenkbewegung des Sitzes um die Kamera selbst bei einem über 360° hinausgehenden Schwenkwinkel nicht behindert wird. Durch ein Ablenkblech im Bereich des Drehrohrträgers wird verhindert, dass das Anschlusskabel in diesem Bereich hängen bleiben kann.

Aufgrund der herausziehbaren Stützschienen bzw. der Sitzbefestigungsschiene kann das Kamerastativ auch platzsparend transportiert werden. Ein weiteres vorteilhaftes Erfindungsmerkmal besteht aber darin, dass an den Traghülsen mit diesen fluchtende Führungshülsen gelenkig befestigt sind. Die Sitzbefestigungs- bzw. Stützschienen können nach dem Herausziehen aus den Traghülsen mit den Führungshülsen nach oben geklappt werden und werden in einer leicht schräg nach innen geklappten Lage in den Führungshülsen gehalten. In dieser Form kann das Kamerastativ als kompaktes Bauteil auf einfache Weise, beispielsweise auf einem Möbelroller, transportiert und raumsparend in einem Übertragungswagen untergebracht werden. Das Kamerastativ kann zudem ohne Verwendung von Werkzeugen einfach und schnell in mehrere Einzelteile zerlegt werden, so dass ein weiter erleichterter Transport und eine noch raumsparendere Unterbringung im Übertragungswagen gewährleistet ist.

In weiterer Ausgestaltung der Erfindung sind an den Stützschienen verstellbare Stützfüße vorgesehen, und der Sitz kann in Längsrichtung stufenlos auf der Sitzbefestigungsschiene verstellt und in einem variablen Neigungswinkel zur Achsrichtung der Sitzbefestigungsschiene eingestellt werden.

Ein Ausführungsbeispiel der Erfindung wird anhand der Zeichnung näher erläutert. Es zeigen:
- Fig. 1: eine Seitenansicht eines niedrig bauenden Kamerastativs mit auf diesem montierter Fernsehkamera in der Betriebsposition;
- Fig. 2: eine Seitenansicht des Kamerstativs in einer zusammengeklappten Transportposition; und
- Fig. 3: eine detaillierte, teilweise im Schnitt dargestellte Teilansicht des Kamerastativs.

Das Kamerastativ umfasst drei waagerechte, im Winkel von 120° angeordnete Traghülsen 1, deren zur Mitte weisende Stirnseiten mit einer Tragsäule 2 und deren oben liegende Längsseiten mit einer Basisplatte 3 verschweißt sind. Die Traghülsen 1 dienen zur Aufnahme von Stützschienen 15 zur seitlichen Abstützung des Kamerastativs. Mit der Basisplatte 3 ist über Schrauben 4 ein in axialer Richtung belastbares Drucklager 5 verbunden, dessen drehbeweglicher Außenring 5a einen Lagerflansch 5b aufweist. Der Lagerflansch 5b ist mittels Schrauben 6 mit dem Bodenflansch 7 eines Drehrohrträgers 8 verbunden. An dem Bodenflansch 7 und in einer Ausnehmung in der Wand des Drehrohrträgers 8 ist eine Traghülse 9 für eine Sitzbefestigungsschiene 10 durch Schweißen gehalten. Auf der freien Stirnseite der Tragsäule 2 ist eine Montageplatte 11 befestigt, an der über einen Schwenk-Neige-Kopf 12 eine Fernsehkamera 13 angebracht werden kann. Zum Verschwenken der Kamera sind die Schwenk- und Zoomgriffe 14 vorgesehen.

An den Traghülsen 1 für die Stützschienen 15 und an der Traghülse 9 für die Sitzbefestigungsschiene 10 sind über ein Scharnier 16 schwenkbar befestigte Führungshülsen 17 angeordnet, in denen die Stützschienen 15 bzw. die winklig ausgebildete Sitzbefestigungsschiene 10 geführt sind. Der Sitz 21 für den Kameramann ist auf der Sitzbefestigungsschiene 10 mit Hilfe eines Führungselements 18 in verschiedenen Positionen stufenlos arretierbar.

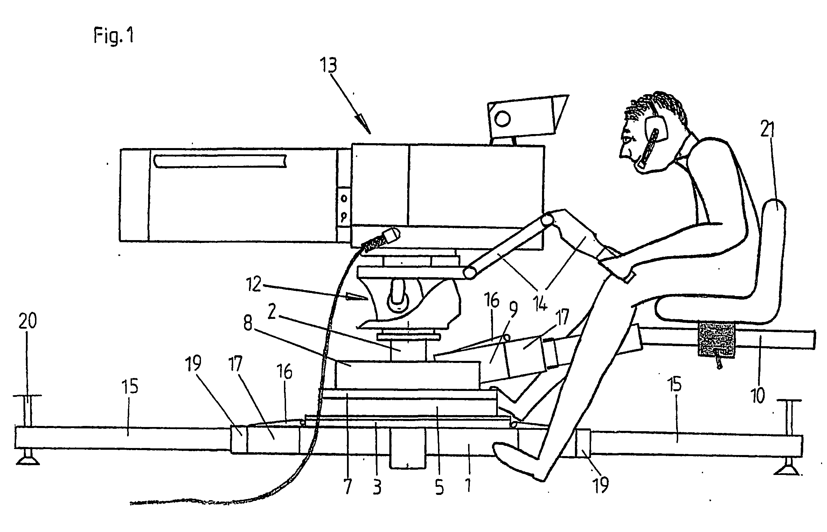

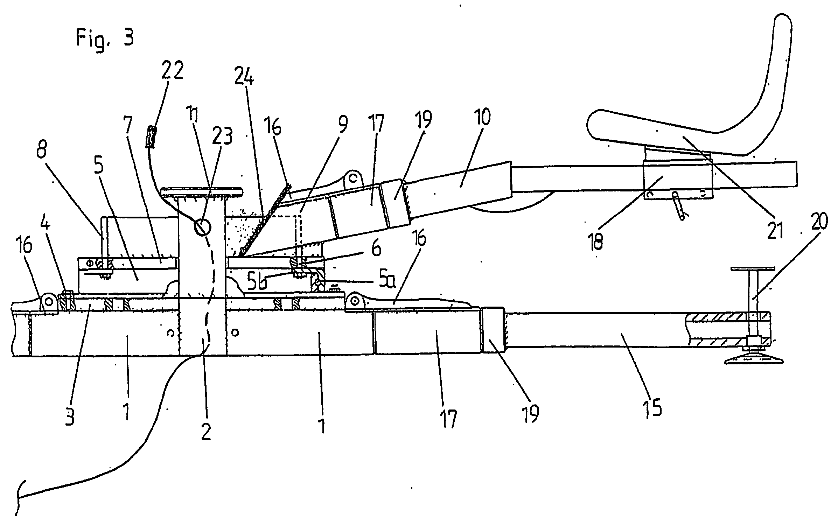

In den Figuren 1 und 3 ist das Kamarastativ in der Betriebsposition, das heißt, in der durch die Stützschienen 15 seitlich abgestützten Lage und mit seitlich ausgestellter Sitzbefestigungsschiene 10 dargestellt. Die Führungshülsen 17 befinden sich in einer mit den Traghülsen 1, 9 fluchtenden Stellung. Die Stützschienen 15 und die Sitzbefestigungsschiene 10 sind bis zu einem Anschlagbund 19 in die Führungshülsen und die Traghülsen eingeschoben. Die Nivellierung des Kamerastativs erfolgt mit an den Enden der Stützschienen 15 höhenverstellbar angeordneten Stützfüßen 20. Das Verschwenken der Fernsehkamera 13 erfolgt über den Schwenk-Neige-Kopf 12, und zwar unabhängig von der Schwenkbewegung der Sitzbefestigungsschiene 10, deren Drehrohrträger 8 von der starr an den Traghülsen 1 und der Basisplatte 3 befestigten Tragsäule 2 räumlich getrennt ist. Die durch das Gewicht des Kameramannes über die Sitzbefestigungsschiene 10 auf den Drehrohrträger 8 wirkenden vertikalen Kräfte werden zum einen von der Wandung des Drehrohrträgers 8 und dem Bodenflansch 7 sowie dem Lagerflansch 5b elastisch aufgenommen und zum anderen in das für hohe axiale Belastungen ausgelegte Drucklager 5 eingeleitet. Die zentrale Tragsäule 2 ist somit von jeglichen äußeren Krafteinwirkungen unbeeinflusst, so dass ein hervorragendes Bild erzeugt werden kann.

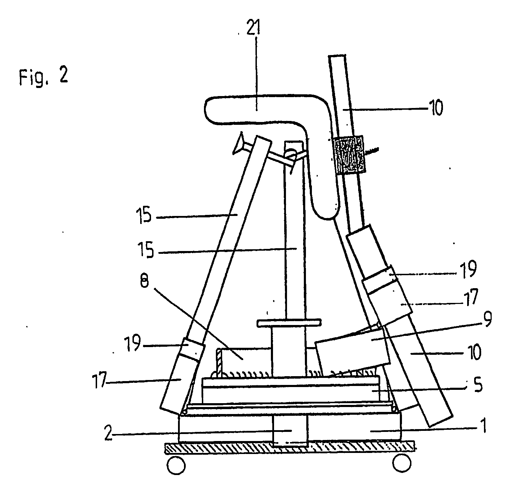

Ein wichtiges Merkmal des oben beschriebenen Kamerastativs besteht, wie aus Fig. 2 ersichtlich ist, aus dessen kompakter, das heißt, für den Transport platzsparender Ausbildung. Dazu werden die Stützschienen 15 und die Sitzbefestigungsschiene 10 aus den Traghülsen 1 und 9 herausgezogen, verbleiben aber in den Führungshülsen 17. Anschließend werden die Stützschienen 15 und die Sitzbefestigungsschiene 10 einschließlich der an dem Scharnier 16 gelenkig gehaltenen Führungshülse 17 in eine schräg nach innen gerichtete Lage verschwenkt. Dabei rutschen die Stützschienen 15 und die Sitzbefestigungsschiene 10 bis zum Anschlagbund 19 wieder in die jeweilige Führungshülse 17. Diese zusammengeklappte Transportposition, in die auch der Sitz 21 integriert ist, ist platzsparend und stabil. Die Bewegung des Kamerastativs zwischen dem Einsatzort und dem Übertragungswagen kann bequem mit einem kleinen Möbelrollwagen oder dergleichen durchgeführt werden. Es ist aber auch denkbar, an den Traghülsen 1 kleine feststellbare Transportrollen unmittelbar anzubringen.

Wie Fig. 3 zeigt, wird das Anschlusskabel 22 zentral über die Tragsäule 2 zur Fernsehkamera geführt, indem es über eine Öffnung im Bodenbereich der Tragsäule 2 in diese eingeführt und über eine weitere Öffnung 23, die sich im Bereich des Drehrohrträgers 8 befindet, wieder aus der Tragsäule 2 herausgeführt wird. Die Traghülse 9 am Drehrohrträger 8 kann somit uneingeschränkt um die Fernsehkamera verschwenkt werden, ohne dass das Anschlusskabel 22 dieser Bewegung im Wege stehen würde. Um zu verhindern, dass das Anschlusskabel an der Stirnseite der Traghülse 9 hängen bleibt, ist dort ein Ablenkblech 24 angebracht.

### Bezugszeichenliste

- 1: Traghülse von 15
- 2: Tragsäule
- 3: Basisplatte
- 4: Schrauben
- 5: Drucklager
- 5a: Außenring
- 5b: Lagerflansch
- 6: Schrauben
- 7: Bodenflansch
- 8: Drehrohrträger
- 9: Traghülse von 10
- 10: Sitzbefestigungsschiene
- 11: Montageplatte
- 12: Schwenk-Neige-Kopf
- 13: Fernsehkamera
- 14: Schwenk- und Zoomgriffe
- 15: Stützschienen
- 16: Scharnier
- 17: Führungshülsen
- 18: Führungselement von 21
- 19: Anschlagbund
- 20: Stützfüße
- 21: Sitz
- 22: Anschlusskabel
- 23: Öffnung
- 24: Ablenkblech

## Patentansprüche

1. Kamerastativ für eine Fernsehkamera mit einem auf einer Tragsäule (2) angebrachten Schwenk-Neige-Kopf für die mit einem Anschlusskabel (22) verbundene Kamera und einem um die Tragsäule (2) verschwenkbaren, auf einer Sitzbefestigungsschiene (10) gehaltenen Sitz (21), wobei die Tragsäule (2) zentrisch auf einer über Stützschienen abgestützten Basisplatte (3) und auf der Basisplatte (3) konzentrisch um die Tragsäule (2) ein Drucklager (5) mit auf dessen beweglichem Außenring (5a) befestigtem Drehrohrträger (8), der mit einer Traghülse (9) zur Halterung der Sitzbefestigungsschiene (10) verbunden ist, angebracht ist.

2. Kamerastativ nach Anspruch 1, **dadurch gekennzeichnet, dass** der Drehrohrträger (8) einen konzentrisch im Abstand von der Tragsäule (2) endenden Bodenflansch (7) aufweist und die Traghülse (9) für die Sitzbefestigungsschiene (10) mit dem Bodenflansch (7) und der Wandung des Drehrohrträgers (8) verschweißt ist.

3. Kamerastativ nach Anspruch 1, **dadurch gekennzeichnet, dass** die Tragsäule (2) eine Durchführung für das Anschlusskabel (22) aufweist, das bodenseitig in die Tragsäule eintritt und über eine seitliche Öffnung (23) wieder austritt.

4. Kamerastativ nach Anspruch 1, **dadurch gekennzeichnet, dass** die Basisplatte (3) an der Unterseite mit radial nach außen gerichteten, stirnseitig an der Tragsäule (2) befestigten Traghülsen (1) zum Einschieben der Stützschienen (15) verbunden ist.

5. Kamerastativ nach Anspruch 3, **dadurch gekennzeichnet, dass** im Bereich der der Tragsäule (2) zugewandten Stirnseite der Traghülse (9) ein Ablenkblech für das Anschlusskabel (22) angebracht ist.

6. Kamerastativ nach Anspruch 1, **dadurch gekennzeichnet, dass** an den freien Stirnseiten der Traghülsen (1, 9) jeweils eine mit diesen fluchtende Führungshülse (17) über ein Scharnier (16) so angelenkt ist, dass die Führungshülse bei aus der jeweiligen Traghülse (1, 9) herausgezogener Stützschiene (15) bzw. Sitzbefestigungsschiene (10) nach oben schwenkbar ist.

7. Kamerastativ nach Anspruch 6, **dadurch gekennzeichnet, dass** die Stützschienen (15) und die Sitzbefestigungsschiene (10) einen Anschlagbund (19) aufweisen, an dem die Sitzbefestigungs- und Stützschienen (10, 15) in der nach oben geschwenkten, in der Führungshülse (17) verbliebenen Lage an dieser gehalten sind.

8. Kamerastativ nach Anspruch 1, **dadurch gekennzeichnet, dass** an den Stützschienen (15) in der Höhe verstellbare Stützfüße (20) vorgesehen sind.

9. Kamerastativ nach Anspruch 1, **dadurch gekennzeichnet, dass** der Sitz (21) über ein Führungselement (18) auf der Sitzbefestigungsschiene (10) in Längsrichtung führbar und arretierbar sowie in der Neigung verstellbar ist.

10. Kamerastativ nach Anspruch 4, **dadurch gekennzeichnet, dass** an den Traghülsen (1) Transportrollen angebracht sind.

11. Kamerastativ nach Anspruch 1, **dadurch gekennzeichnet, dass** die Stützschienen (15) und die Sitzbefestigungsschiene (10) in den Führungshülsen (17) und der Sitz (21) an der Sitzbefestigungsschiene (10) lösbar befestigt und als Einzelteile transportierbar sind.

## Claims

1. A camera stand for a television camera with a swinging and tilting head mounted to the supporting column (2) for the camera that is connected via a connecting cable (22), and a seat (21) that can be pivoted around the supporting column (2) and that is held on a seat mounting rail (10), the supporting column (2) being centrally mounted on a base plate (3) supported by support blocks, and a thrust bearing (5) being concentrically mounted on said base plate (3) around the supporting column, said thrust bearing (5) having a rotary cylinder holder (8) mounted to its movable outer ring (5a) and being linked with a carrying sleeve (9) for holding the seat mounting rail (10).

2. The camera stand according to claim 1, **characterized in that** the rotary cylinder holder (8) comprises a bottom flange (7) that concentrically ends at a spacing from the supporting column (2), and the carrying sleeve (9) for the seat mounting rail (10) is welded together with the bottom flange (7) and the wall of the rotary cylinder holder (8).

3. The camera stand according to claim 1, **characterized in that** the supporting column (2) comprises a bushing for the connecting cable (22) that enters the supporting column at the bottom and exits through a lateral opening (23).

4. The camera stand according to claim 1, **characterized in that** the base plate (3) is connected with carrying sleeves (1) that stretch radially outwards from its bottom side the front ends of which are attached to the supporting column (2) for inserting the support rails (15).

5. The camera stand according to claim 3, **characterized in that** the carrying sleeve (9) comprises a deflector plate for the connecting cable (22) at its front end that faces the supporting column (2).

6. The camera stand according to claim 1, **characterized in that** a guide sleeve (17) is mounted flush to the free ends of the carrying sleeves (1, 9) using a hinge (16) so that said guide sleeve can be folded upward when the support rail (15) is pulled out of the respective carrying sleeve (1, 9) or seat mounting rail (10).

7. The camera stand according to claim 6, **characterized in that** the support rails (15) and the seat mounting rail (10) comprise a stop collar (19) to which the seat mounting and support rails (10, 15) are held in their folded-up position when remaining in the guide sleeve (17).

8. The camera stand according to claim 1, **characterized in that** the support rails (15) are provided with height-adjustable support feet (20).

9. The camera stand according to claim 1, **characterized in that** the seat (21) can be guided in longitudinal direction and locked on the seat mounting rail (10) and adjusted in tilt using a guide element (18).

10. The camera stand according to claim 4, **characterized in that** transport rollers are attached to the carrying sleeves (1).

11. The camera stand according to claim 1, **characterized in that** the support rails (15) and the seat mounting rail (10) are detachably mounted in the carrying sleeves (17), and **in that** the seat (21) is detachably mounted to the seat mounting rail (10) so that these components can be transported as separate parts.

## Revendications

1. Pied de caméra pour une caméra de télévision, comportant une tête pivotable/inclinable, montée sur une colonne de support (2), pour la caméra connectée par un câble de branchement (22), et un siège (21) mobile en pivotement autour de la colonne de support (2) et retenu sur un rail de fixation de siège (10), la colonne de support (2) est montée au centre sur une plaque de base (3), supportée par des rails de soutien, et un palier de butée (5) monté sur la plaque de base (3) concentriquement autour de la colonne de support (2) et comprenant un support de tube rotatif (8) qui est fixé sur sa bague extérieure mobile (5a) et qui est relié à une douille de support (9) destinée à la monture du rail de fixation de siège (10).

2. Pied de caméra selon la revendication 1, **caractérisé en ce que** le support de tube rotatif (8) comprend une bride de fond (7) qui se termine concentriquement à distance de la colonne de support (2), et **en ce que** la douille de support (9) pour le rail de fixation de siège (10) est assemblée par soudage avec la bride de fond (7) et avec la paroi du support de tube rotatif (8).

3. Pied de caméra selon la revendication 1, **caractérisé en ce que** la colonne de support (2) présente un passage pour le câble de branchement (22) qui rentre du côté fond dans la colonne de support et qui sort par une ouverture latérale (23).

4. Pied de caméra selon la revendication 1, **caractérisé en ce que** la plaque de base (3) est reliée, sur le côté inférieur, à des douilles de support (1) dirigées radialement vers l'extérieur et fixées du côté frontal sur la colonne de support (2), destinées à introduire les rails de soutien (15).

5. Pied de caméra selon la revendication 3, **caractérisé en ce qu'**il est prévu dans la zone du côté frontal de la douille de support (9), tourné vers la colonne de support (2), une tôle de déviation pour le câble de branchement (22).

6. Pied de caméra selon la revendication 1, **caractérisé en ce que** sur les côtés frontaux libres des douilles de support (1, 9), une douille de guidage respective (17) en alignement avec celles-ci est articulée via une charnière (16) de telle sorte que la douille de guidage est susceptible de pivoter vers le haut lorsque le rail de soutien (15) ou le rail de fixation de siège (10) est extrait hors de la douille de support respective (1, 9).

7. Pied de caméra selon la revendication 6, **caractérisé en ce que** les rails de soutien (15) et le rail de fixation de siège (10) comprennent un collier de butée (19) sur lequel sont retenus les rails de fixation de siège et de soutien (10, 15) dans la position pivotée vers le haut en demeurant dans la douille de guidage (17).

8. Pied de caméra selon la revendication 1, **caractérisé en ce que** des semelles de soutien (20) réglables en hauteur sont prévues sur les rails de soutien (15).

9. Pied de caméra selon la revendication 1, **caractérisé en ce que** le siège (21) est susceptible d'être guidé en direction longitudinale sur le rail de fixation de siège (10) par un élément de guidage (18), et d'être arrêté et réglé vis-à-vis de l'inclinaison.

10. Pied de caméra selon la revendication 4, **caractérisé en ce que** des rouleaux de transport sont agencés sur les douilles de support (1).

11. Pied de caméra selon la revendication 1, **caractérisé en ce que** les rails de soutien (15) et le rail de fixation de siège (10) sont fixés de façon détachable dans les douilles de guidage (17) et le siège (21) est fixé de façon détachable sur le rail de fixation de siège (10), et **en ce qu'**ils sont transportables sous forme de pièces individuelles.
